# EUROPÄISCHE PATENTSCHRIFT

(11) **EP 2 496 639 B1**
(45) Veröffentlichungstag und Bekanntmachung des Hinweises auf die Patenterteilung: **25.12.2013**
(21) Anmeldenummer: 10778960.4
(22) Anmeldetag: 03.11.2010
(51) Int. Cl.: C08K 5/523, C08L 33/08, C08L 33/10, C08L 67/02, C08L 69/00

(54) **POLYCARBONATZUSAMMENSETZUNG MIT VERBESSERTER FLAMMWIDRIGKEIT FÜR EXTRUSIONSANWENDUNGEN**
POLYCARBONATE COMPOSITION HAVING IMPROVED FLAME RESISTANCE FOR EXTRUSION APPLICATIONS
COMPOSITION DE POLYCARBONATE À IGNIFUGEAGE AMÉLIORÉ POUR DES APPLICATIONS D'EXTRUSION

(30) Priorität: 05.11.2009 DE 102009052042
(43) Veröffentlichungstag der Anmeldung: 12.09.2012
(73) Patentinhaber: Bayer Intellectual Property GmbH, 40789 Monheim (DE)
(72) Erfinder: MEYER, Alexander, 40489 Düsseldorf (DE); KRAUTER, Berit, 51379 Opladen (DE); RÜDIGER, Claus, 47829 Krefeld (DE); BLASCHKE, Ulrich, 47829 Krefeld (DE); SCHWARZ, Peter, 47800 Krefeld (DE)
(74) Vertreter: BIP Patents
(86) Internationale Anmeldenummer: PCT/EP2010/066736
(87) Internationale Veröffentlichungsnummer: WO 2011/054866

(56) Entgegenhaltungen:
- DATABASE CA [Online] CHEMICAL ABSTRACTS SERVICE, COLUMBUS, OHIO, US; MARUYAMA, HIROYOSHI: "Transparent light diffusers with good impact and discoloration resistance, and resin compositions for them", XP002627503, gefunden im STN Database accession no. 147:302362 -& JP 2007 217567 A (MITSUBISHI CHEMICAL CORP., JAPAN) 30. August 2007 (2007-08-30)
- DATABASE CA [Online] CHEMICAL ABSTRACTS SERVICE, COLUMBUS, OHIO, US; IKEMATSU, RYUSUKE ET AL: "Flame-retardant light-diffusive polycarbonate resin composition", XP002627504, gefunden im STN Database accession no. 151:9449 & CN 101 423 655 A (TEIJIN CHEMICALS LTD., JAPAN) 6. Mai 2009 (2009-05-06)

## Beschreibung

Die vorliegende Erfindung betrifft Zusammensetzungen enthaltend Polycarbonat und 0,10 Gew.-% bis 4,00 Gew.-% eines Acrylat-basierenden Streuadditivs, 0,50 Gew.-% - 5,00 Gew.-% eines aromatisch-aliphatischen Polyesters und 0,50 Gew.-% bis 8,00 Gew.-% eines Phosphor-basierten Flammschutzmittels, jeweils bezogen auf das Gewicht der Gesamtzusammensetzung, für Extrusionsanwendungen.

Flammfest ausgerüstete Kunststoffformmassen werden für eine Vielzahl von Anwendungen eingesetzt. Typische Einsatzgebiete solcher Kunststoffe sind die Elektrotechnik und Elektronik, wo sie unter anderem zur Herstellung von Trägem spannungsführender Teile oder in Form von Fernseh- und Monitorgehäusen eingesetzt werden. Aber auch im Bereich der Innenverkleidungen von Schienenfahrzeugen oder Flugzeugen haben flammwidrig ausgerüstete Kunststoffe ihren festen Platz gefunden. Hierbei müssen die verwendeten Kunststoffe neben guten Flammschutzeigenschaften auch weitere positive Eigenschaften auf hohem Niveau zeigen. Hierzu gehören unter anderem mechanische Eigenschaften, wie zum Beispiel eine hohe Schlagzähigkeit sowie eine hinreichende Langzeitstabilität gegenüber thermischer Beanspruchung oder aber gegenüber einer möglichen Schädigung durch Lichteinwirkung. Hierbei ist eine solche Kombination an Eigenschaften nicht immer einfach zu erreichen. Zwar lässt sich in Kunststoffen mit Hilfe von Flammschutzmitteln in der Regel die gewünschte Flammwidrigkeit einstellen. Oft sind hierfür jedoch verhältnismäßig hohe Mengen erforderlich, was rasch zu einer drastischen Verschlechterung übriger Eigenschaften wie z.B. der Mechanik führt.

Lichtstreuende Eigenschaften des Kunststoffs lassen sich über die Zugabe von sogenannten Streuadditiven einstellen. Die Zugabe von organischen Streuadditiven, insbesondere solcher auf Acylatbasis, verschlechtern jedoch die Brandeigenschaften der Zusammensetzung drastisch, und es müssten hohe Mengen eines Flammschutzmittels zugegeben werden, um die gewünschte Flammwidrigkeit einzustellen.

Es wurde nun gefunden, dass die Flammwidrigkeit von Polycarbonatzusammenzusetzungen enthaltend Streuadditive überraschenderweise durch eine kombinierte Zugabe von kleinen Anteilen Polyester und Flammschutzadditiv deutlich erhöht werden kann.

WO 2002/059207 A beschreibt flammgeschützte Polycarbonatzusammensetzungen enthaltend cycloaliphatische Polyester. Diese cycloaliphatischen Polyester haben jedoch einen hohen aliphatischen Anteil, was sich ungünstig auf die Brandeigenschaften von Polycarbonat auswirkt. Ferner sind sie teurer verglichen mit aromatischen Polyestern aus der vorliegenden Erfindung. Mischungen mit cycloaliphatischen Polyestern sind nicht Gegenstand der vorliegenden Erfindung.

Die US-A 2003/0069338 offenbart in diesem Zusammenhang flammgeschützte Formmassen, welche synergistische Kombinationen aus Cyanacrylaten und Flammschutzmitteln enthalten. Die so ausgerüsteten Formmassen zeichnen sich durch eine verbesserte Flammwidrigkeit und eine verbesserte Witterungsstabilität aus. Cyanacrylate können jedoch das Verarbeitungsverhalten von Polycarbonat - z.B. bei hohen Temperaturen - ungünstig beeinflussen. Mischungen mit Cyanacrylaten sind nicht Gegenstand der vorliegenden Anmeldung.

Mischungen, die Polyalkylenterephthalate und Polycarbonate enthalten, sowie ihre Verwendungen sind bekannt (siehe beispielsweise US-A 3 218 372, DE-OS 1 694 124, US-A 3 730 767, JP-A 7 401 639, US-A 3 849 188, DE-OS 2 439 342 und DE-OS 2 708 381). Die erfindungsgemäßen Zusammensetzungen sind darin jedoch nicht beschrieben.

Bekannt sind auch Folien und Platten auf Basis von Polyester-Polycarbonat-Gemischen, die aus maximal 50 Gew.-% Polycarbonat und aus mindestens 50 Gew.-% Polyethylenterephthalat bestehen und gegebenenfalls noch andere Zusätze enthalten können (siehe US-A 3 956 229, US-A 3 975 355 und DE-OS 26 47 565). Die Flammwidrigkeit derartiger Mischungen ist in diesen Literaturstellen nicht angesprochen.

Bekannt sind flammfeste Mischungen aus Polyalkylenterephthalaten, Organopolysiloxan-Polycarbonat-Blockcopolymeren und halogenierten Copolycarbonaten, die für die Herstellung von Filmen und Platten geeignet sind (siehe US-A 4 155 898). Bekannt sind auch Mischungen aus Polyalkylenterephthalaten, Organopolysiloxan-Polycarbonat Blockcopolymeren und CaCO₃, die ebenfalls für die Herstellung von Filmen und Platten geeignet sind (siehe US-A 4 157 997). Bekannt sind auch Gemische aus speziellen Halogenbisphenolpolycarbonaten und Polyestern wie Polybutylenterephthalaten, die verbesserte flammhemmende Eigenschaften haben (siehe DE-OS 30 23 796).

EP-A 0 120 394 beschreibt Polycarbonatzusammensetzungen mit aromatischen Polyestern, die eine verbesserte Flammwidrigkeit nach Außenbewitterung aufweisen. Diese Anmeldung betrifft jedoch keine Zusammensetzungen, die Streupartikel enthalten.

Bevorzugt sind die erfindungsgemäßen Platten mehrschichtig aufgebaut. So sind sie bevorzugt mit einer UV-Schutzschicht ausgestattet, welche bevorzugt im Coextrusionverfahren aufgebracht wird. Derartige Extrusionsmaterialien werden in der Literatur beschrieben.

Die US-A 2006/0234061 beschreibt Mehrschichtsysteme umfassend eine UV-Schutzschicht, welche Polyalkylen(meth)acrylat und Verbindungen vom Typ der 2,4-Bis-(4-phenylphenyl)-6-(2-hydroxypgenyl)-1,3,5-triazine enthält sowie eine zweite, Polycarbonat enthaltende Schicht. Jedoch kann mit diesen Systemen keine Verbesserung in den Flammschutzeigenschaften erreicht werden.

In der US-A 6 255 483 sowie in der GB 2317174 A werden biphenylsubstituierte Triazinverbindungen beschrieben. Mischungen mit weiteren Additiven werden in allgemeiner Form erwähnt. Eine spezifische Lehre zur Bereitstellung von Zusammensetzungen mit verbesserten Flammschutzeigenschaften ist dem Dokument allerdings nicht zu entnehmen.

Eine Aufgabe der vorliegenden Erfindung ist die Bereitstellung von Zusammensetzungen enthaltend Polycarbonat, welche verbesserte Flammschutzeigenschaften in Kombination mit hoher Streuwirkung aufweisen. Die Zusammensetzungen sollen sich für milchweiß-eingefärbte Extrusionsprodukte eignen.

Im Rahmen der vorliegenden Erfindung wurde nun überraschenderweise gefunden, dass die Flammwidrigkeit von Extrusionskörpern aus Zusammensetzungen enthaltend Polycarbonat und Flammschutzmittel durch die Zugabe von aromatischen Polyester und einem Acrylat-basierten Streuadditiv synergistisch erhöhen kann.

Die vorliegende Erfindung betrifft somit Zusammensetzungen enthaltend lineares und/oder verzweigtes aromatisches Polycarbonat und
a) 0,10 Gew.-% - 4,00 Gew.-%, bevorzugt 0,50 Gew% - 2,00 Gew. %, besonders bevorzugt 0,50 Gew.-% - 1,50 Gew.-% sowie in einer speziellen Ausführungsform bevorzugt 1,60 Gew.-% - 4,00 Gew.-%, eines acrylat-basierten Streuadditivs bevorzugt basierend auf Polymethylmethacrylat und Polybutylacrylat, z.B. in Kern-Schale-Morphologie;
b) 0,50 Gew.-% - 5,00 Gew.-%, bevorzugt 1,00 Gew.-% - 3,00 Gew.-%, besonders bevorzugt 1,00 Gew.-% - 2,50 Gew.-% eines oder mehrer aromatisch-aliphatischer Polyester. Bei den Polyestern handelt es sich bevorzugt um thermoplastische Polyester, deren Säurekomponente überwiegend aromatisch ist und zu mindestens 85 Mol-% aus Terephthalsäure besteht und deren Diolkomponente überwiegend aliphatisch ist und zu mindestens 80 Mol-% aus Butandiol-1, 4, Ethandiol-1,2 und/oder Cyclohexandimethanol-1,4 besteht;
c) 0,50 Gew.-% bis 8,00 Gew.-%, bevorzugt 1,00 Gew.-% - 6,00 Gew.-%, besonders bevorzugt 3,00 Gew.-% - 5,50 Gew.-% eines oder mehrer Phosphor-basierten Flammschutzmittel. Bevorzugt ist mindestens eines dieser Phosphor-basierten Flammschutzmittel ein oligomerer Phosphorsäureester, der sich von Bisphenol A oder Resorcin, insbesondere bevorzugt von Bisphenol A, ableitet.

Die Gew.-%-Angaben beziehen sich hierbei stets auf das Gewicht der Gesamtzusammensetzung.

Solche Zusammensetzungen lassen sich in diversen Anwendungen vorteilhaft einsetzen. Die erfindungsgemäßen Zusammensetzungen eignen sich vor allem für den Einsatz in Form von Platten für Architektur- oder Industrieverscheibungen wie z.B. Wand- und Dachbekleidungen, Lichtkuppeln oder bruchsicheren Verscheibungen, als Verkleidungen von Schienenfahrzeug- und Flugzeuginnenräumen, an die jeweils erhöhte Anforderungen an die Flammwidrigkeit gestellt werden. Diese Platten lassen sich insbesondere durch Extrusion herstellen. Hierbei kann es sich um massive Platten, bevorzugt in einer Dicke von 1 bis 10 mm, oder um Hohlkammerplatten, wie z.B. Stegplatten oder Mehrfachstegplatten oder Hohlprofile mit besonderer Geometrie handeln.

In der vorliegenden Anmeldung wird die extrudierte Platte auch als "Basisschicht" bezeichnet, die zu ihrer Herstellung verwendete Zusammensetzung als "Basismaterial". Die Basisschicht kann gegebenenfalls noch mit weiteren (Schutz-)Schichten und insbesondere einseitig oder beidseitig mit einer Deckschicht oder mehreren Deckschichten versehen sein. Diese Schichten werden bevorzugt über Coextrusion hergestellt ("Coex-Schichten").

Formteile aus Bisphenol-A-Polycarbonat sind normalerweise schwer entflammbar und können häufig bereits ohne spezielle flammhemmende Additive die Klassifizierung V2 gemäß Underwriters Laboratories Subject 94 erzielen. Mit flammhemmenden Additiven, Halogenadditiven oder Antidrippingmitteln kann gegebenenfalls sogar die Klassifizierung V0 nach UL Subject 94 erzielt werden.

Insbesondere für extrudierte Artikel für den Einsatz im Baubereich werden jedoch weitere Tests gefordert.

Die für die Bundesrepublik Deutschland verbindliche Norm DIN 4102 teilt die Baustoffe nach ihrem Brandverhalten in folgende Klassen ein: Baustoffklasse A nicht brennbar, Baustoffklasse B1 schwer entflammbar, Baustoffklasse B2 normal entflammbar, Baustoffklasse B3 leicht entflammbar. Brennbare Baustoffe werden in die Klasse B1 eingestuft, wenn sie die Prüfung im Brandschacht gemäß DIN 4102 bestehen.

Dünne Massivplatten bis 4 mm Dicke für Innenanwendungen oder dünne Stegplatten und Profile bis zu einer Dicke von 10 bis 16 mm aus Bisphenol A-Polycarbonat können im Brandschachttest ein B1 erreichen. Für dicke Massivplatten mit einer Dicke größer 4 mm oder dickere Stegplatten und Profile mit Dicken größer 16 mm lässt sich häufig nur ein B2 für Außenanwendungen erreichen, insbesondere, wenn die Stegplatten komplizierte Profile und/oder ein hohes Flächengewicht aufweisen und dazu noch mit organischen Additiven eingefärbt sind.

Mit den hier beschriebenen Zusammensetzungen können extrudierte Artikel hergestellt werden, die, selbst wenn sie ein kompliziertes Profil und/oder hohe Flächengewichte aufweisen, überraschenderweise die oben genannten Erfordernisse für eine B1-Einstufung erfüllen.

Insbesondere lassen sich mit der erfindungsgemäßen Zusammensetzung Platten mit Flächengewichten von größer oder gleich 2,4 kg/m², größer oder gleich 2,5 kg/m² und bzw. oder größer oder gleich 2,7 kg/m² herstellen. Weitere bevorzugte Flächengewichte der Platten sind größer oder gleich 2,8 kg/m², größer oder gleich 3,1 kg/m² und bzw. oder größer oder gleich 3,4 kg/m². In anderen Ausführungsformen sind bevorzugte Platten solche mit einem Flächengewicht von größer oder gleich 3,5 kg/m² und bzw. oder größer oder gleich 3,7 kg/m² und Platten mit einem Flächengewicht von größer oder gleich 4,2 kg/m². Besonders bevorzugt sind auch Platten mit den vorgenannten Flächengewichten, wenn es sich um Stegmehrfachplatten handelt.

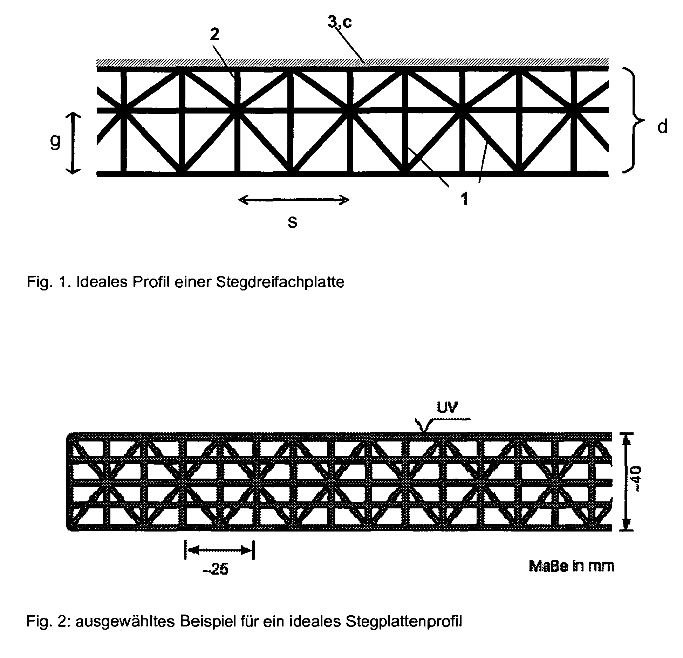

Ein Beispiel einer Stegmehrfachplatte (Dreifachplatte mit X-Profil) zusätzlich enthaltend eine Coextrusionsschicht (3) ist in Figur 1 dargestellt. Die Stegplatte besteht aus Stegen (1) und Gurten (2), wobei jeweils der oberste und der unterste Gurt die Außenschichten bilden. Stehen nicht alle Stege parallel zueinander senkrecht zu den Gurten, sondern kreuzen sich an einem inneren Gurt, wird das Profil als X-Profil bezeichnet. Der Abstand zwischen zwei parallelen Stegen an den Außengurten beträgt s, der Abstand der Gurte (2) ist mit g gekennzeichnet. Die Gesamtdicke der Platte von Außengurt zu Außengurt ist mit d gekennzeichnet, die Dicke der Coextrusionsschicht (3) ist mit c gekennzeichnet.

Aus der erfindungsgemäßen Zusammensetzung werden beispielsweise Platten mit folgenden Plattengeometrien hergestellt:
- 3fach Stegplatte mit einer Dicke von 12 bis 20 mm und einem Stegabstand von 12 bis 20 mm,
- 6fach Stegplatte mit einer Dicke von 12 bis 22 mm und einem Stegabstand von 12 bis 22 mm,
- 3fach Stegplatte mit einem X-Profil und einer Dicke von 12 bis 20 mm, wobei die X-Struktur (gebildet von 3 Stegen) eine Breite von 20 bis 30 mm aufweist,
- 5fach Stegplatte mit einem X-Profil und einer Dicke von 20 bis 50 mm, wobei die X-Struktur (gebildet von 3 Stegen) eine Breite von 20 bis 30 mm aufweist,
- 5fach Stegplatte mit einem M-Profil und einer Dicke von 20 bis 50 mm, wobei die Stege einen Abstand von 15 bis 25 mm aufweisen.

Ein weiteres Ausführungsbeispiel ist in Figur 2 dargestellt, welche eine ideale 5-fach Stegplatte mit X-Profil zeigt.

Die vorliegende Erfindung betrifft auch Verfahren zur Herstellung einer erfindungsgemäßen Zusammensetzung, dadurch gekennzeichnet, dass Polycarbonat und
a) 0,10 Gew.-% - 4,00 Gew.-% eines acrylat-basierten Streuadditivs
b) 0,50 Gew.-% - 5,00 Gew.-% eines aromatisch/aliphatischen Polyesters
c) 0,50 Gew.-% bis 8,00 Gew.-% eines Phosphor-basierten Flammschutzmittels
zusammengeführt und vermischt werden, gegebenenfalls in Lösungsmittel, wobei gegebenenfalls homogenisiert wird und das Lösungsmittel entfernt wird. Gegebenenfalls können einzelne Additive mit einem Pulver- oder granulatförmigen Polycarbonat vorgemischt und dann zugegeben werden.

Polycarbonate für die erfindungsgemäßen Zusammensetzungen sind Homopolycarbonate, Copolycarbonate, thermoplastische Polyestercarbonate und Blends bzw. Mischungen dieser Polymere. Insbesondere bevorzugt ist aromatisches lineares und/oder verzweigtes aromatisches Polycarbonat, ganz besonders bevorzugt sind für bestimmte Ausführungsformen der vorliegenden Erfindung Mischungen aus verzweigtem und linearem Polycarbonat.

Bevorzugt werden hierbei Mischungen eingesetzt, die mindestens 50 Gew.-%, bevorzugt mindestens 60 Gew.-%, besonders bevorzugt mindestens 70 Gew.-% lineares Polycarbonat und mindestens 10 Gew.-%, bevorzugt mindestens 14 Gew.-% verzweigtes Polycarbonat enthalten.

Bevorzugt bestehen die erfindungsgemäßen Zusammensetzungen zu mindestens 80 Gew.-% aus Polycarbonat basierend auf Bisphenol A (Summe aus verzweigtem und linearem Bisphenol A-Polycarbonat). Alle Gew.-%-Angaben beziehen sich auch hier wieder auf das Gewicht der jeweiligen Gesamtzusammensetzung.

Die erfindungsgemäßen linearen bzw. verzweigten Polycarbonate und Copolycarbonate haben im Allgemeinen mittlere Molekulargewichte (Gewichtsmittel) von 2.000 bis 200.000, bevorzugt 3.000 bis 150.000, insbesondere 5.000 bis 100.000, ganz besonders bevorzugt 8.000 bis 80.000, insbesondere 12.000 bis 70.000 g/mol (bestimmt mittels Gelpermeationschromatographie mit Polycarbonat-Eichung).

Für die vorliegende Erfindung sind Polycarbonate mit einem gewichtsmittleren Molekulargewicht M̅ _{w} von 16.000 bis 40.000 g/mol besonders bevorzugt.

Zur Herstellung von Polycarbonaten für die erfindungsgemäßen Zusammensetzungen sei beispielhaft auf "Schnell", Chemistry and Physics of Polycarbonats, Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren oder dem Schmelze-Umesterungsverfahren und wird zunächst beispielhaft an dem Phasengrenzflächenverfahren beschrieben.

Als Ausgangsverbindungen bevorzugt einzusetzende Verbindungen sind Bisphenole der allgemeinen Formel HO-Z-OH, worin Z ein divalenter organischer Rest mit 6 bis 30 Kohlenstoffatomen ist, der eine oder mehrere aromatische Gruppen enthält. Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)sulfone, Bis(hydroxyphenyl)ketone und α,α'-Bis(hydroxyphenyl)-di-isopropylbenzole gehören.

Besonders bevorzugte Bisphenole, die zu den vorgenannten Verbindungsgruppen gehören, sind Bisphenol-A, Tetraalkylbisphenol-A, 4,4-(meta-Phenylendiisopropyl)diphenol (Bisphenol M), 4,4-(para-Phenylendiisopropyl)diphenol, N-Phenyl-Isatinbisphenol, 1,1-Bis-(4-hydroxyphenyl)-3,3,5-trimethylcyclohexan (BP-TMC), Bisphenole vom Typ der 2-Hydrocarbyl-3,3-bis(4-hydroxyaryl)phthalimidine, insbesondere 2-Phenyl-3,3-bis(4-hydroxyphenyl)phthalimidin, sowie gegebenenfalls deren Gemische. Besonders bevorzugt sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan. Die erfindungsgemäß einzusetzenden Bisphenolverbindungen werden mit Kohlensäureverbindungen, insbesondere Phosgen oder beim Schmelzeumesterungsprozess Diphenylcarbonat bzw. Dimethylcarbonat, umgesetzt.

Polyestercarbonate werden durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'-oder 4,4'-Diphenyldicarbonsäure und Benzophenondicarbonsäuren. Ein Teil, bis zu 80 Mol-%, vorzugsweise von 20 bis 50 Mol-% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol. Vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden die in DE-A 42 38 123 genannten Katalysatoren verwendet.

Die Polycarbonate können durch den Einsatz geringer Mengen Verzweiger bewusst und kontrolliert verzweigt werden. Einige geeignete Verzweiger sind: Isatinbiskresol, Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenyl-methan; 2,2-Bis-[4,4-bis-(4-hydroxyphenyl)-cyclohexyl]-propan; 2,4-Bis-(4-hydroxyphenyl-isopro-pyl)-phenol; 2,6-Bis-(2-hydroxy-5'-methyl-benzyl)-4-methylphenol; 2-(4-Hydroxyphenyl)-2-(2,4-di-hydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α,α',α"-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-di-hydroxytriphenyl)-methyl)-benzol und insbesondere: 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 Mol%, bezogen auf eingesetzte Diphenole, an Verzweigern bzw. Mischungen der Verzweiger, können mit den Diphenolen zusammen eingesetzt werden aber auch in einem späteren Stadium der Synthese zugegeben werden.

Es können Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet in Mengen von 1-20 Mol-%, bevorzugt 2-10 Mol-%, je Mol Bisphenol. Bevorzugt sind Phenol, 4-tert.-Butylphenol bzw. Cumylphenol.

Kettenabbrecher und Verzweiger können getrennt oder aber auch zusammen mit dem Bisphenol den Synthesen zugesetzt werden.

Das erfindungsgemäß besonders bevorzugte Polycarbonat ist Bisphenol-A-Homopolycarbonat.

Alternativ können die erfindungsgemäßen Polycarbonate auch nach dem Schmelzumesterungsverfahren hergestellt werden. Das Schmelzumesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-C 10 31 512 beschrieben.

Beim Schmelzumesterungsverfahren werden die bereits beim Phasengrenzflächenverfahren beschriebenen aromatischen Dihydroxyverbindungen, mit Kohlensäurediestern unter Zuhilfenahme von geeigneten Katalysatoren und gegebenenfalls weiteren Zusatzstoffen in der Schmelze umgeestert Kohlensäurediester im Sinne der Erfindung sind solche der Formel (1) und (2) 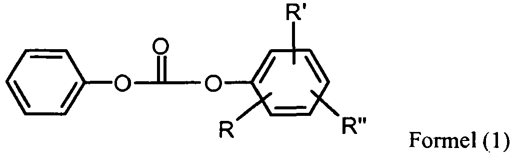 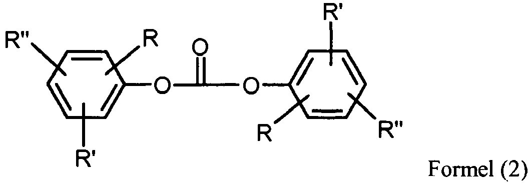 wobei
R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können,
beispielsweise
Diphenylcarbonat, Butylphenyl-phenylcarbonat, Di-Butylphenylcarbonat, Isobutylphenylphenylcarbonat, Di-Isobutylphenylcarbonat, tert-Butylphenyl-phenylcarbonat, Di-tert-Butylphenylcarbonat, n-Pentylphenyl-phenylcarbonat, Di-(n-Pentylphenyl)carbonat, n-Hexylphenylphenylcarbonat, Di-(n-Hexylphenyl)carbonat, Cyclohexylphenyl-phenylcarbonat, Di-Cyclohexylphenylcarbonat, Phenylphenol-phenylcarbonat, Di-Phenylphenolcarbonat, Isooctylphenyl-phenylcarbonat, Di-Isooctylphenylcarbonat, n-Nonylphenyl-phenylcarbonat, Di-(n-Nonylphenyl)carbonat, Cumylphenyl-phenylcarbonat, Di-Cumylphenylcarbonat, Naphthylphenyl-phenylcarbonat, Di-Naphthylphenylcarbonat, Di-tert-Butylphenyl-phenylcarbonat, Di-(Di-tert-Butylphenyl)carbonat, Dicumylphenyl-phenylcarbonat, Di-(Dicumylphenyl)carbonat, 4-Phenoxyphenyl-phenylcarbonat, Di-(4-Phenoxyphenyl)carbonat, 3-Pentadecylphenylphenylcarbonat, Di-(3-Pentadecylphenyl)carbonat, Tritylphenyl-phenylcarbonat, Di-Tritylphenylcarbonat,
bevorzugt
Diphenylcarbonat, tert-Butylphenyl-phenylcarbonat, Di-tert-Butylphenylcarbonat, Phenylphenol-phenylcarbonat, Di-Phenylphenolcarbonat, Cumylphenyl-phenylcarbonat, Di-Cumylphenylcarbonat,
besonders bevorzugt Diphenylcarbonat.

Es können auch Mischungen der genannten Kohlensäurediester eingesetzt werden.

Der Anteil an Kohlensäureester beträgt 100 bis 130 mol-%, bevorzugt 103 bis 120 mol-%, besonders bevorzugt 103 bis 109 mol-%, bezogen auf die Dihydroxyverbindung.

Als Katalysatoren im Sinne der Erfindung werden im Schmelzumesterungsverfahren wie in der genannten Literatur beschrieben basische Katalysatoren wie beispielsweise Alkali- und Erdalkalihydroxide und -oxide aber auch Ammonium- oder Phosphoniumsalze, im Folgenden als Oniumsalze bezeichnet, eingesetzt. Bevorzugt werden dabei Oniumsalze, besonders bevorzugt Phosphoniumsalze eingesetzt. Phosphoniumsalze im Sinne der Erfindung sind solche der Formel (3) 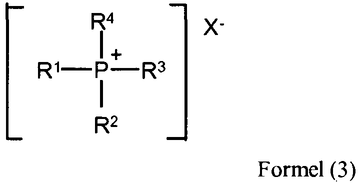 wobei
- R¹⁻⁴: dieselben oder verschiedene C₁-C₁₀-Alkyle, C₆-C₁₀-Aryle, C₇-C₁₀-Aralkyle oder C₅-C₆-Cycloalkyle sein können, bevorzugt Methyl oder C₆-C₁₄-Aryle, besonders bevorzugt Methyl oder Phenyl, und
- X⁻: ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R C₆-C₁₄-Aryl oder C₇-C₁₂-Aralkyl, bevorzugt Phenyl, sein kann.

Bevorzugte Katalysatoren sind
Tetraphenylphosphoniumchlorid,
Tetraphenylphosphoniumhydroxid,
Tetraphenylphosphoniumphenolat,
besonders bevorzugt ist Tetraphenylphosphoniumphenolat.

Die Katalysatoren werden bevorzugt in Mengen von 10⁻⁸ bis 10⁻³ mol, bezogen auf ein mol Bisphenol, besonders bevorzugt in Mengen von 10⁻⁷ bis 10⁻⁴ mol, eingesetzt.

Weitere Katalysatoren können allein oder gegebenenfalls zusätzlich zu dem Oniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid- und Natriumphenolat. Die Mengen des Cokatalysators können im Bereich von 1 bis 200 ppb, vorzugsweise 5 bis 150 ppb und am meisten bevorzugt 10 bis 125 ppb liegen, jeweils berechnet als Natrium.

Die Umesterungsreaktion der aromatischen Dihydroxyverbindung und des Kohlensäurediester in der Schmelze wird bevorzugt in zwei Stufen durchgeführt. In der ersten Stufe findet das Aufschmelzen der aromatischen Dihydroxyverbindung und des Kohlensäurediester bei Temperaturen von 80 bis 250°C, bevorzugt 100 bis 230°C, besonders bevorzugt 120 bis 190°C unter normalem Druck in 0 bis 5 Stunden, bevorzugt 0,25 bis 3 Stunden statt. Nach Zugabe des Katalysators wird durch Anlegen von Vakuum (bis zu 2 mm Hg) und Erhöhung der Temperatur (auf bis zu 260°C) durch Abdestillieren des Monophenols das Oligocarbonat aus der aromatischen Dihydroxyverbindung und dem Kohlensäurediester hergestellt. Hierbei fällt die Hauptmenge an Brüden aus dem Prozess an. Das so hergestellte Oligocarbonat hat eine mittlere Gewichtsmolmasse M_{w} (ermittelt durch Messung der rel. Lösungsviskosität in Dichlormethan oder in Mischungen gleicher Gewichtsmengen Phenol/o-Dichlorbenzol geeicht durch Lichtstreuung) im Bereich von 2000 g/mol bis 18 000 g/mol bevorzugt von 4 000 g/mol bis 15 000 g/mol.

In der zweiten Stufe wird bei der Polykondensation durch weiteres Erhöhen der Temperatur auf 250 bis 320°C, bevorzugt 270 bis 295°C und einem Druck von <2 mm Hg das Polycarbonat hergestellt. Hierbei wird der Rest an Brüden aus dem Prozess entfernt.

Die Katalysatoren können auch in Kombination (zwei oder mehrere) miteinander eingesetzt werden.

Beim Einsatz von Alkali-/Erdalkalimetallkatalysatoren kann es vorteilhaft sein, die Alkali-/ Erdalkalimetallkatalysatoren zu einem späteren Zeitpunkt (z. B. nach der Oligocarbonatsynthese bei der Polykondensation in der zweiten Stufe) zuzusetzen.

Die Reaktion der aromatischen Dihydroxyverbindung und des Kohlensäurediester zum Polycarbonat kann im Sinne des erfindungsgemäßen Verfahrens diskontinuierlich oder bevorzugt kontinuierlich durchgeführt werden, beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren.

Analog des Phasengrenzflächenverfahrens können durch Einsatz mehrfunktioneller Verbindungen verzweigte Poly- oder Copolycarbonate hergestellt werden.

Für die in der erfindungsgemäßen Zusammensetzung enthaltenden Acrylat-basierten Streuadditive werden bevorzugt Polymethylmethacrylat - haltige Additive eingesetzt, z.B. polymere Teilchen aus Polymethylmethacrylat und Polybutylacrylat mit Kern-Schale-Morphologie, wie z.B. Paraloid^{®} EXL 5136 oder Paraloid^{®} EXL 5137 erhältlich von der Firma Rohm & Haas, oder auch teil- oder vollvernetzte spherische oder nicht-spherische Acrylatpartikel, wie z.B. solche aus der Techpolymer^{®} MBX Serie der Fa. Sekisui Plastics.

Streuadditive mit Kern-Schale-Morphologie sind beispielsweise in EP 0 634 445 B1 als "polymeric particle (b)" beschrieben.

Die Streuadditive haben im allgemeinen einen durchschnittlichen Teilchendurchmesser von wenigstens 0,5 Mikrometer, bevorzugt von wenigstens 2 Mikrometer, mehr bevorzugt von 2 bis 50 Mikrometer, am meisten bevorzugt von 2 bis 15 Mikrometer. Dabei ist unter dem Durchschnitt der Zahlendurchschnitt der Teilchendurchmesser und unter dem Teilchendurchmesser der Durchmesser einer Kugel mit einem dem Teilchen äquivalenten Volumen zu verstehen. Bevorzugt haben wenigstens 90 % einen Durchmesser von mehr als 2 Mikrometer. Die Streuadditive werden beispielsweise als frei fließendes Pulver oder in kompaktierter Form eingesetzt.

Die weiterhin in der erfindungsgemäßen Zusammensetzung verwendeten Polyester sind aromatisch/aliphatische thermoplastische Polyester, deren Säurekomponente zu mindestens 85 Mol-% aus Terephthalsäure und deren Diolkomponente zu mindestens 80 Mol-% aus Butandiol-1, 4, Ethandiol-1,2 und/oder Cyclohexandimethanol-1,4 bestehen. Dies sind z.B. Polyester mit Butylenterephthalat-, Ethylenterephthalat-, und/oder Cyclohexandimethanol-terephthalat-Einheiten. Die Diolkomponente kann bis zu 20 Mol-% aus anderen aliphatischen Diolen mit 3 bis 12 C-Atomen oder aus cycloaliphatischen Diolen mit 6 bis 21 C-Atomen bestehen. Beispielsweise sind hier Propandiol-1,3-, Neopentylglykol, Pentandiol-1,5, Hexandiol-1,6, 3-Methylpentandiol-2,4, 2-Methylpentandiol-2,4, 2,2,4-Trimethylpentandiol-1,3.

Neben Terephthalsäure können in der Säurekomponente bis zu 15 Mol-% Dicarbonsäuren, z.B. Isophthalsäure, Adipinsäure, Succinsäure, Sebacinsäure, Naphthalin-2,6-dicar-bonsäure, Diphenyldicarbonsäure, Azelainsäure, Cyclohexandiessigsäure enthalten sein.

Die Polyalkylenglykolterephthalate können nach bekannten Verfahren beispielsweise aus Terephthalsäuredialkylester und dem entsprechenden Diol durch Umesterung erhalten werden (Herstellungsverfahren siehe z.B. US-A 2 647 885, 2 643 989, 2 534 028, 2 578 660, 2 742 494, 2 901 466). Zur Herstellung geht man beispielsweise von einem niederen Alkylester der Terephthalsäure, vorzugsweise dem Dimethylester, aus und estert diesen mit einem Überschuss an Diol in Gegenwart geeigneter Katalysatoren zum Bishydroxyalkylester der Terephthalsäure um. Dabei wird die Temperatur ausgehend von 140 °C auf 210 - 220 °C erhöht. Der freigesetzte Alkohol wird abdestilliert. Die Aufkondensation erfolgt anschließend bei Temperaturen von 210 - 280 °C, der Druck wird dabei stufenweise bis auf weniger als 1 Torr erniedrigt, wobei das überschüssige Diol abdestilliert wird.

Die gewichtsmittleren Molekulargewichte M̅ _{w} der Terephthalate bzw. der Mischpolyester aus Terephthal- und Isophthalsäuren liegen zwischen 30 000 und 80 000, bestimmt durch Messung der intrinsischen-Viskosität (Grenzviskositätszahl, auf Konzentration 0 extrapolierter Wert der reduzierten spezifischen Viskosität)-I.V- in Phenol/o-Dichlorbenzol (1/1) bei 25°C als 5%ige Lösung, bzw. über den RSV-Wert (reduzierte spezifische Viskosität), wobei es sich hierbei um den durch die Konzentration der gemessenen Lösung dividierten Betrag der spezifischen Viskosität handelt. Die Bestimmung des RSV-Wertes wird in Phenol/Tetrachlorethan (60/40) bei 20°C mit einer 23%-igen Lösung vorgenommen.

Besonder bevorzugte aromatisch/aliphatische thermoplastische Polyester sind Polybutylenterephthalate mit einem M̅ _{w} zwischen 30 000 und 60 000.

Die in der erfindungsgemäßen Zusammensetzung enthaltenden Phosphor-basierten Flammschutzmittel bestehen bevorzugt aus oligomeren Phosphorsäureestern, die sich von folgender Formel (4) ableiten: 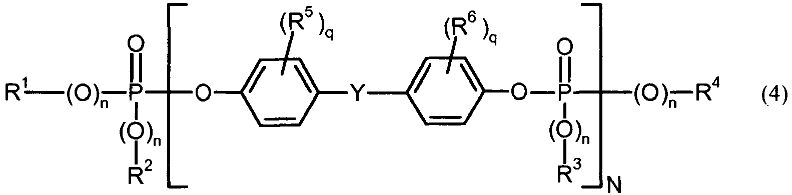 worin
- R¹, R², R³ und R⁴,: unabhängig voneinander gegebenenfalls durch Halogen substituiertes C₁-C₈-Alkyl, jeweils gegebenenfalls durch Halogen und/oder Alkyl substituiertes C₅-C₆-Cycloalkyl, C₆-C₁₀-Aryl oder C₇-C₁₂-Aralkyl,
- n: unabhängig voneinander 0 oder 1,
- q: unabhängig voneinander 0, 1, 2, 3 oder 4,
- N: 0, 60 bis 4,00, vorzugsweise 0,90 bis 2,50, insbesondere 1,00 bis 1,15 ist,
- R⁵ und R⁶: unabhängig voneinander C₁-C₄-Alkyl, vorzugsweise Methyl oder Halogen, vorzugsweise Chlor und/oder Brom bedeuten,
- Y: C₁-C₇-Alkyliden, C₁-C₇-Alkylen, C₅-C₁₂-Cycloalkylen, C₅-C₁₂-Cycloalkyliden, -O-, -S-, -SO-, -SO₂-, -CO- oder einen Rest der Formel (5) oder (6) 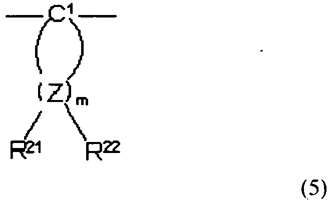 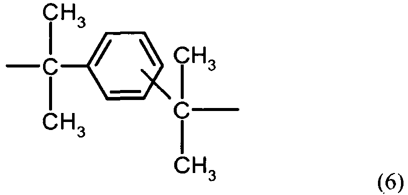
mit
Z = Kohlenstoff und
R²¹ und R²² für jedes Z individuell wählbar, unabhängig voneinander Wasserstoff oder C1-C6-Alkyl, vorzugsweise Wasserstoff, Methyl oder Ethyl, und
m einer ganze Zahl von 4 bis 7, bevorzugt 4 oder 5,
mit der Maßgabe, dass an mindestens einem Atom Z R²¹ und R²² gleichzeitig Alkyl sind,
bedeutet.

Die erfindungsgemäß geeigneten Phosphorverbindungen gemäß Formel (4) sind generell bekannt (s. beispielsweise Ullmanns Encyklopädie der Technischen Chemie, Bd. 18, S. 301 ff. 1979; Houben-Weyl, Methoden der Organischen Chemie, Bd. 12/1, S. 43; Beistein, Bd. 6, S. 177).

Bevorzugte Substituenten R¹ bis R⁴ umfassen Methyl, Butyl, Octyl, Chlorethyl, 2-Chlorpropyl, 2,3-Dibrompropyl, Phenyl, Kresyl, Cumyl, Naphthyl, Chlorphenyl, Bromphenyl, Pentachlorphenyl und Pentabromphenyl. Besonders bevorzugt sind Methyl, Ethyl, Butyl, Phenyl und Naphthyl.

Die aromatischen Gruppen R¹, R², R³ und R⁴ können mit Halogen und/oder C₁-C₄-Alkyl substituiert sein. Besonders bevorzugte Aryl-Reste sind Kresyl, Phenyl, Xylenyl, Propylphenyl oder Butylphenyl sowie auch die bromierten und chlorierten Derivate davon.

R⁵ und R⁶ bedeuten unabhängig voneinander vorzugsweise Methyl oder Brom.

Y steht vorzugsweise für C₁-C₇-Alkylen, insbesondere für Isopropyliden oder Methylen, ganz besonders bevorzugt für Isopropyliden.

n in der Formel (4) kann unabhängig voneinander 0 oder 1 sein, vorzugsweise ist n gleich 1.

q kann 0, 1, 2, 3 oder 4 sein, vorzugsweise ist q 0, 1 oder 2.

N kann Werte von 0,50 bis 4,00, vorzugsweise 0,90 bis 2,50, insbesondere 1,00 bis 1,15 annehmen. Als erfindungsgemäßes Flammschutzmittel gemäß Formel (4) können auch Mischungen verschiedener Phosphate eingesetzt werden. In diesem Fall ist N ein Durchschnittswert. In diesem Gemisch können auch Monophosphorverbindungen (N=0) enthalten sein.

Vorzugsweise ist der Anteil der Monophosphorverbindungen (N=0) im Flammschutzmittel gemäß Formel (4) kleiner gleich 5,00 Gew.-%, bevorzugt kleiner gleich 4,00 Gew.-%, besonders bevorzugt kleiner gleich 3,00 Gew.-%.

Die mittleren N-Werte können bestimmt werden in dem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für N berechnet werden.

Im Rahmen der vorliegenden Erfindung werden die Phosphorverbindungen der Formel (4) in Mengen von 0,50 Gew.-% bis 8,00 Gew.-% eingesetzt.

Die genannten Phosphorverbindungen sind bekannt (vgl. z.B. EP-A 363 608, EP-A 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Besonders bevorzugt ist im Rahmen der vorliegenden Erfindung Bisphenol-A-diphosphat, Bisphenol-A-diphosphat ist u.a. als Reofos^{®} BAPP (Firma Chemtura, Indianapolis, USA), NcendX^{®} P-30 (Firma Albemarle, Baton Rouge, Louisiana, USA), Fyrolflex^{®} BDP (Firma Akzo Nobel, Arnheim, Niederlande) oder CR 741^{®} (Firma Daihachi, Osaka, Japan) kommerziell erhältlich.

Weitere Phosphorsäureester, die im Rahmen der vorliegenden Erfindung eingesetzt werden können, sind zudem Triphenylphosphat, welches unter anderem als Reofos^{®} TPP (Firma Chemtura), Fyrolflex^{®} TPP (Firma Akzo Nobel) oder Disflamoll^{®} TP (Firma Lanxess) angeboten wird, sowie Resorcindiphosphat. Resorcoindiphosphat lässt sich als Reofos^{®} RDP (Firma Chemtura) oder Fyrolflex^{®} RDP (Firma Akzo Nobel) käuflich erwerben.

Den erfindungsgemäßen Polycarbonaten und Copolycarbonaten können noch andere aromatische Polycarbonate und/oder andere Kunststoffe wie aromatische Polyestercarbonate, Polyamide, Polyimide, Polyesteramide, Polyacrylate und Polymethacrylate wie zum Beispiel Polyalkyl(meth)acrylate und hier insbesondere Polymethylmethacrylat, Polyacetale, Polyurethane, Polyolefine, halogenhaltige Polymere, Polysulfone, Polyethersulfone, Polyetherketone, Polysiloxane, Polybenzimidazole, Harnstoff-Formaldehyd-Harze, Melamin-Formaldehydharze, Phenol-Formaldehyd-Harze, Alkydharze, Epoxidharze, Polystyrole, Copolymere des Styrols oder des alpha-Methylstyrols mit Dienen oder Acrylderivaten, Pfropfpolymerisate auf Basis Acrylnitril/-Butadien/- Styrol oder auf Acrylatkautschuk basierende Pfropfcopolymerisate (s. beispielsweise die in EP-A 640 655 beschriebenen Pfropfpolymerisate) beziehungsweise Siliconkautschuke in bekannter Weise zugemischt werden, beispielsweise durch Compoundierung.

Den erfindungsgemäßen Polycarbonaten sowie den gegebenenfalls weiteren enthaltenen Kunststoffen können noch die für diese Thermoplasten üblichen Additive wie Füllstoffe, UV-Stabilisatoren, Thermostabilisatoren, Antistatika und Pigmente in den üblichen Mengen zugesetzt werden; gegebenenfalls können das Entformungsverhalten und das Fließverhalten noch durch Zusatz externer Entformungsmittel und Fließmittel verbessert werden (z. B. niedermolekulare Carbonsäureester, Kreide, Quarzmehl, Glas- und Kohlenstofffasern, Pigmente und deren Kombination). Für Polycarbonat üblicherweise verwendete Additive werden z. B. in WO 99/55772 A, S. 15-25, EP-A 1 308 084 und in den entsprechenden Kapiteln des "Plastics Additives Handbook" , ed. Hans Zweifel, 5^{th} Edition 2000, Hanser Publishers, Munich beschrieben.

Die gegebenenfalls zur weiteren Erhöhung der Flammwidrigkeit der erfindungsgemäßen Zusammensetzung zugesetzten Salze sind beispielsweise Alkali- bzw. Erdalkalisalze von aliphatischen bzw. aromatischen Sulfonsäure- Sulfonamid- und Sulfonimidderivaten, z.B. Natrium-oder Kaliumperfluorbutansulfat, Natrium- oder Kaliumperfluormethansulfonat, Natrium- oder Kaliumperfluoroctansulfat, Natrium-oder Kalium-2,5-dichlorbenzolsulfat, Natrium- oder Kalium-2,4,5-trichlorbenzolsulfat, Natrium- oder Kalium-methylphosphonat, Natrium- oder Kalium-(2-phenyl-ethylen)-phosphonat, Natrium- oder Kaliumpentachlorbenzoat, Natrium- oder Kalium-2,4,6-trichlorbenzoat, Natrium- oder Kalium-2,4-dichlorbenzoat, Lithium-phenylphosphonat, Natrium-oder Kalium-diphenylsulfon-sulfonat, Natrium- oder Kalium-2-formylbenzolsulfonat, Natrium- oder Kalium-(N-benzolsulfonyl)-benzolsulfonamid. Trinatrium- oder Trikalium-hexafluoroaluminat, Dinatrium- oder Dikalium-hexafluorotitanat, Dinatrium- oder Dikalium-hexafluorosilikat, Dinatrium- oder Dikalium-hexafluorozirkonat, Natrium- oder Kalium-pyrophosphat, Natrium- oder Kalium-metaphosphat, Natrium- oder Kalium-tetrafluoroborat, Natrium- oder Kaliumhexafluorophosphat, Natrium- oder Kalium- oder Lithiumphosphat, N-(p-tolylsulfonyl-)-p-toluolsulfimid-Kaliumsalz, N-(N'-Benzylaminocarbonyl)-sulfanylimid-Kaliumsalz.

Bevorzugt werden Natrium- oder Kaliumperfluorbutansulfat, Natrium- oder Kaliumperfluoroctansulfat, Natrium- oder Kalium-diphenylsulfon-sulfonat und Natrium oder Kalium-2,4,6-trichlorbenzoat und N-(p-tolylsulfonyl-)-p-toluolsulfimid-Kaliumsalz, N-(N'-Benzylaminocabonyl)-sulfanylimid-Kaliumsalz. Ganz besonders bevorzugt sind Kalium-nona-fluor-1-butansulfonat und Natrium- oder Kalium-diphenylsulfonsulfonat. Kaliumperfluorbutansulfonat ist u.a. als Bayowet^{®}C4 (Firma Lanxess, Leverkusen, Deutschland), RM64^{®} (Firma Miteni, Italien) oder als 3M™ Perfluorobutanesulfonyl Fluoride FC-51 (Firma 3M, USA) kommerziell erhältlich. Ebenfalls sind Mischungen der genannten Salze geeignet.

Als Antitropfmittel kann den Formmassen zusätzlich Polytetrafluorethylen (PTFE) zugefügt werden. Letzteres ist in diversen Produktqualitäten kommerziell verfügbar. Hierzu zählen Additive wie Hostaflon^{®} TF2021 oder aber PTFE-Blends wie Metablen^{®} A-3800.

Weitere geeignete Flammschutzmittel im Sinne der vorliegenden Erfindung sind halogenhaltige Verbindungen. Hierzu zählen bromierte Verbindungen wie bromierte Oligocarbonate (z.B. Tetrabrombisphenol-A-oligocarbonat BC-52^{®}, BC-58^{®}, BC-52HP^{®} der Firma Chemtura), Polypentabrombenzylacrylate (z.B. FR 1025^{®} der Firma Dead Sea Bromine (DSB)), oligomere Umsetzungsprodukte aus Tetrabrom-bisphenol-A mit Expoxiden (z.B. FR 2300^{®} und 2400^{®} der Firma DSB), oder bromierte Oligo- bzw. Polystyrole (z.B. Pyro-Chek^{®} 68PB der Firma Ferro Corporation, PDBS 80^{®} und Firemaster^{®} PBS-64HW der Firma Chemtura).

Des weiteren können chlorhaltige Flammschutzmittel wie zum Beispiel Tetrachlorphthalimide eingesetzt werden.

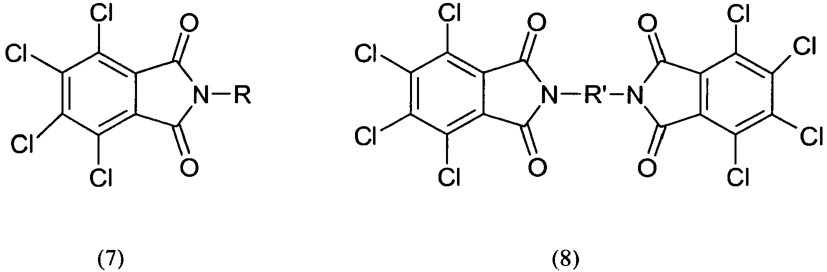

Als geeignete Tetrachlorphthalimide im Sinne der Erfindung gemäß Formel (7) seien beispielsweise genannt: N-Methyl-tetrachlorphthalimid, N-ethyl- tetrachlorphthalimid, N-Propyl-tetrachlorphthalimid, N-Isopropyl-tetrachlorphthalimid, N-Butyl- tetrachlorphthalimid, N-Isobutyltetrachlorphthalimid, N-Phenyl- tetrachlorphthalimid, N- (4-Chlorphenyl) tetrachlorphthalimid, N-(3, 5-Dichlorphenyl)-tetrachlorphthalimid N-(2,4,6-Trichlorphenyl)- tetrachlorphthalimid, N-Naphthyl- tetrachlorphthalimid. Als geeignete Tetrachlorphthalimideim Sinne der Erfindung gemäss Formel (7) seienbeispielsweise genannt: N,N'-Ethylen-di-tetrachlorphthalimid. N.N'- Propylen-di- tetrachlorphthalimid N,N'-Butylen-di-tetrachlorphthalimid N,N'-p-Phenylen-di-tetrachlorphthalimid, 4,4'-Di-tetrachlorphthalimido-diphenyl,N-(Tetrachlorphthalimido)-tetrachlorphthalimid. Insbesondere geeignet im Sinne der Erfindung sind N-Methyl- sowie N-Phenyltetrachlorphthalimid, N,N'-Ethylen-di-tetrachlorphthalimid und N-(Tetrachlorphthalimido)-tetrachlorphthalimid. Mischungen verschiedener Tetrachlorphthalimide der Formeln (7) oder (8) sind gleichfalls zu verwenden.

Die brom- beziehungsweise chlorhaltigen Flammschutzmittel können auch in Kombination mit Antimontrioxid eingesetzt werden.

Hierbei ist die vorliegende Erfindung nicht auf die genannten Flammschutzmittel beschränkt, vielmehr können auch weitere flammhemmende Additive, wie z.B. in J. Troitzsch, "International Plastics Flammability Handbook", Hanser Verlag, München 1990 beschrieben, eingesetzt werden.

Im Rahmen der vorliegenden Erfindung ist die alleinige Verwendung von Phosphorsäureestern gemäß Formel (4) als Flammschutzmittel ohne den Zusatz weiterer Flammschutzmittel und bzw. oder Antitropfmittel besonders bevorzugt.

Die Herstellung einer Zusammensetzung enthaltend Polycarbonat und die genannten Zuschlagstoffe und Additive kann mit gängigen Einarbeitungsverfahren erfolgen, beispielsweise durch Vermischen von Lösungen der Zuschlagstoffe und einer Lösung des Polycarbonats in geeigneten Lösungsmitteln wie Dichlormethan, Halogenalkanen, Halogenaromaten, Chlorbenzol und Xylolen. Die Substanzgemische werden dann bevorzugt in bekannter Weise durch Extrusion homogenisiert. Die Lösungsgemische werden bevorzugt in bekannter Weise durch Ausdampfen des Lösungsmittels und anschließender Extrusion aufgearbeitet, beispielsweise compoundiert.

Zudem kann die Zusammensetzung in üblichen Mischvorrichtungen wie Schneckenextrudern (zum Beispiel Zweischneckenextruder, ZSK), Kneter, Brabender- oder Banbury-Mühlen gemischt und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und bzw. oder ebenfalls gemischt hinzugegeben werden.

Nach der Herstellung und Aufarbeitung der erfindungsgemäßen Zusammensetzung können diese zu beliebigen Formkörpern verarbeitet werden, beispielsweise durch Extrusion, Spritzguss oder Extrusionsblasformen. Bevorzugt werden die Zusammensetzungen zu (co)extrudierten Formkörpern, wie z.B. Platten verarbeitet.

Als Basismaterial für diese Platten kann lineares Polycarbonat, verzweigtes Polycarbonat oder eine Mischung aus linearem und verzweigtem Polycarbonat eingesetzt werden.

Für Massivplatten wird bevorzugt aber nicht ausschließlich lineares Polycarbonat verwendet.

Für Stegmehrfachplatten kommt lineares Polycarbonat, verzweigtes Polycarbonat oder eine Mischung aus linearem und verzweigtem Polycarbonat zum Einsatz. Bevorzugt werden Mischungen eingesetzt, die mindestens 50 Gew.-%, bevorzugt mindestens 60 Gew.-%, besonders bevorzugt mindestens 70 Gew.-% lineares Polycarbonat und mindestens 10 Gew.-%, bevorzugt mindestens 14 Gew.-% verzweigtes Polycarbonat enthalten.

Bevorzugt bestehen die Platten zu mindestens 80 Gew.-% aus Polycarbonat auf Basis Bisphenol A (Summe aus verzweigtem und linearem Bisphenol A-Polycarbonat). Alle Gew.-%-Angaben beziehen sich auch hier wieder auf das Gewicht der jeweiligen Gesamtzusammensetzung.

Die Platten im Sinne der Erfindung enthalten bevorzugt mindestens eine Deckschicht enthaltend UV-Absorber. Ferner kann die Basisschicht ebenfalls UV-Absorber enthalten. Deckschichten können ein-oder beidseitig aufgetragen sein. Die Dicke der coextrudierten Deckschichten liegt gewöhnlich zwischen 5 und 150 µm, bevorzugt zwischen 20 und 100 µm.

Die Dicke der Deckschicht kann über die Breite geringfügig schwanken. Das Polycarbonat der Deckschicht kann aus linearem und bzw. oder verzweigtem Polycarbonat bestehen, bevorzugt wird lineares Polycarbonat eingesetzt.

Insbesondere betrifft diese Erfindung Platten, die in der oder den Deckschicht(en) einen oder mehrere UV-Absorber ausgewählt aus folgenden Substanzklassen enthalten: Benztriazole, Triazine, Cyanacrylate, Bismalonate.

Die Deckschicht enthält ganz besonders bevorzugt einen oder mehrere UV-Absorber ausgewählt aus folgenden Substanzen: 2-[2-Hydroxy-4-(2-ethylhexyl)oxy]phenyl-4,6-di(4-phenyl)phenyl-1,3,5-triazin (CAS No. 204583-39-1); 2-(2H-benzotriazol-2-yl)-4-(1,1-dimethylethyl)-6-(1-methylpropyl)-phenol (CAS No. 36437-37-3), welches unter dem Namen Tinuvin^{®} 350 bei der Fa. Ciba kommerziell erhältlich ist; 2,2'-methylenebis[6-(2H-benzotriazol-2-yl)-4-(1,1,3,3-tetramethylbutyl)-phenol (CAS No. 103597-45-1), welches unter dem Namen Tinuvin^{®} 360 bei der Fa. Ciba oder dem Namen ADK Stab LA31® bei der Firma Adeka-Palmarole kommerziell erhältlich ist; 2-(4,6-diphenyl-1,3,5-triazin-2-yl)-5-(hexyloxy)-phenol (CAS No. 147315-50-2), welches unter dem Namen Tinuvin^{®} 1577 bei der Fa. Ciba kommerziell erhältlich ist; 2-[4,6-bis(2,4-dimethylphenyl)-1,3,5-triazin-2-yl]-5-(octyloxy)-phenol (CAS No. 2725-22-6), welches unter dem Namen Cyasorb^{®} UV-1164 bei der Cytec Industries Inc. kommerziell erhältlich ist; Ethyl-2-cyano-3,3-diphenylacrylat (CAS No. 5232-99-5), welches unter dem Namen Uvinul^{®} 3035 bei der BASF AG kommerziell erhältlich ist; 2-Ethylhexyl-2-cyano-3,3-diphenylacrylat (CAS No. 6197-30-4), welches unter dem Namen Uvinul^{®} 3039 bei der BASF AG kommerziell erhältlich ist; 1,3-bis-[(2'-cyano-3',3'-diphenylacryloyl)oxy]-2,2-bis-{[(2'-cyano-3',3'-diphenylacryloyl)oxy]-methyl}-propan (CAS No. 178671-58-4), welches unter dem Namen Uvinul^{®} 3030 bei der BASF AG kommerziell erhältlich ist; Tetra-ethyl-2,2'-(1,4-phenylen-dimethyliden)-bismalonat (CAS No. 6337-43-5), welches unter dem Namen Hostavin^{®} B-CAP™ XP3030 bei der Clariant GmbH kommerziell erhältlich ist.

Die Basisschicht der erfindungsgemäßen Platten enthält entweder keinen UV-Absorber oder einen oder mehrere UV-Absorber ausgewählt aus folgenden Substanzklassen: Benztriazole, Cyanacrylate, Bismalonate.

Bevorzugt enthält die Basisschicht der erfindungsgemäßen einen oder mehrere UV-Absorber, besonders bevorzugt ausgewählt aus folgenden Substanzen: 2-(2H-benzotriazol-2-yl)-4-(1,1,3,3-tetramethylbutyl)-phenol (CAS No. 3147-75-9), welches unter dem Namen Tinuvin® 329 bei der Fa. Ciba oder unter dem Namen Uvinul^{®} 3029 bei der BASF AG oder unter dem Namen Cyasorb^{®} UV-5411 bei der Cytec Industries Inc. kommerziell erhältlich ist; 2-(2H-benzotriazol-2-yl)-4,6-bis(1-methyl-1-phenylethyl)-phenol (CAS No. 70321-86-7), welches unter dem Namen Tinuvin 234^{®} bei der Fa. Ciba kommerziell erhältlich ist; 2-(5-chloro-2H-benzotriazol-2-yl)-6-(1,1-dimethylethyl)-4-methyl)-phenol (CAS No. 3896-11-5), welches unter dem Namen Tinuvin^{®} 326 bei der Fa. Ciba oder unter dem Namen Uvinul^{®}3026 bei der BASF AG kommerziell erhältlich ist; 2,2'-methylenebis[6-(2H-benzotriazol-2-yl)-4-(1,1,3,3-tetramethylbutyl)-phenol (CAS No. 103597-45-1), welches unter dem Namen Tinuvin^{®} 360 bei der Fa. Ciba oder dem Namen ADK Stab LA31^{®} bei der Firma Adeka-Palmarole kommerziell erhältlich ist; Ethyl-2-cyano-3,3-diphenylacrylat (CAS No. 5232-99-5), welches unter dem Namen Uvinul^{®} 3035 bei der BASF AG kommerziell erhältlich ist; 2-Ethylhexyl-2-cyano-3,3-diphenylacrylat (CAS No. 6197-30-4), welches unter dem Namen Uvinul^{®} 3039 bei der BASF AG kommerziell erhältlich ist; 1,3-bis-[(2'-cyano-3',3'-diphenylacryloyl)oxy]-2,2-bis-{[(2'-cyano-3',3'-diphenylacryloyl)oxy]methyl}-propan (CAS No. 178671-58-4), welches unter dem Namen Uvinul^{®} 3030 bei der BASF AG kommerziell erhältlich ist; Tetra-ethyl-2,2'-(1,4-phenylen-dimethyliden)-bismalonat (CAS No. 6337-43-5), welches unter dem Namen Hostavin^{®} B-CAP™ XP3030 bei der Clariant GmbH kommerziell erhältlich ist.

Der Gewichtsanteil des UV-Absorbers in der Deckschicht beträgt 0,50 Gew.-% - 11,00 Gew.-%, bevorzugt 1,00 Gew.-% - 3,00 Gew.-% sowie in einer speziellen Ausführungsform 4,00 Gew.-% - 8,00 Gew.-%, bezogen auf die Gesamtzusammensetzung der Deckschicht. Das Polycarbonat kann linear oder verzweigt sein, es kann auch Mischungen der oben genannten UV-Absorber enthalten, dann entspricht die UV-Absorber Gewichtsangabe der Summe der beiden UV-Absorber. Soweit ein UV-Absorbers in der Basisschicht eingesetzt wird, beträgt der Gewichtsanteil 0,01 Gew.-% - 1,00 Gew.-%, bevorzugt 0,05 Gew.-% - 0,50 Gew.-%, bezogen auf die Gesamtzusammensetzung der Basisschicht.

Die erfindungsgemäßen Erzeugnisse, insbesondere Massivplatten oder Stegplatten, können auch weitere funktionale oder dekorative Schichten, beispielsweise hergestellt durch Coextrusion oder Beschichtungsverfahren, enthalten. Anwendungen der Erzeugnisse finden sich in den Bereichen Architekturverscheibung, insbesondere Bedachungen und Verglasungen von Schwimmbädern, Carports, Gewächshäusern, Industriekomplexen und privaten Gebäuden, sowie Lärmschutz- und Sichtschutzwände.

### Ausführungsbeispiele

### Verwendete Rohstoffe und Additive

Makrolon^{®} DP1-1883 ist kommerziell erhältlich bei der Fa. Bayer MaterialScience AG. Es handelt sich um ein lineares Polycarbonat auf Basis von Bisphenol-A mit einer Schmelze-Volumenfließrate (MVR) bestimmt nach ISO 1133 von 6,0 cm³/(10 min) bei 300 °C und 1,2 kg Belastung.

Makrolon^{®} 1243 MAS 157 ist kommerziell erhältlich bei der Fa. Bayer MaterialScience AG. Makrolon^{®} 1243 MAS 157 ist ein verzweigtes Polycarbonat auf Basis von Bisphenol-A mit einer Schmelze-Volumenfließrate (MVR) nach ISO 1133 von 6,0 cm³/(10 min) bei 300 °C und 1,2 kg Belastung.

"Streuadditiv-Compound": Bei diesem Compound handelt es sich um ein Polycarbonat-Masterbatch basierend auf linearem Polycarbonat (mit einer Schmelze-Volumenfließrate (MVR) bestimmt nach ISO 1133 von 6,0 cm³/(10 min) bei 300 °C und 1,2 kg Belastung) enthaltend ein Streuadditiv aus Kern-Schale-Teilchen basierend auf Polymethylmethacrylat und Polybutylacrylat mit einer Teilchengröße von 2 bis 15 µm und einer mittleren Teilchengröße von 8 µm (Paraloid® EXL 5137 der Fa. Rohm & Haas) mit einem Anteil von ca. 20,00 Gew.-%, bezogen auf das Gesamtgewicht des "Streuadditiv-Compounds".

Makrolon^{®} DP1-1816 MAS 073 ist ein lineares Polycarbonat auf Basis von Bisphenol-A enthaltend Triazin-basierten UV-Absorber von der Firma Bayer MaterialScience AG mit einer Schmelze-Volumenfließrate (MVR) nach ISO 1133 von 9,0 cm³/(10 min) bei 300 °C und 1,2 kg Belastung.

Bei Reofos^{®} BAPP handelt es sich um Bisphenol-A-diphosphat (BDP) erhältlich von der Firma Chemtura (Indianapolis, USA).

Pocan^{®} 1300 ist ein aromatischer Polyester basierend auf Polybutylenterephthalat und ist erhältlich bei der Firma Lanxess AG.

Herstellung der Polycarbonat-Zusammensetzung für die Basisschichten in den unten genannten

### Beispielen:

Die Polycarbonatzusammensetzungen wurden durch Compoundierung hergestellt. Die Einrichtung zur Compoundierung besteht aus:
- Dosiereinrichtung für die Komponenten
- einem gleichlaufenden Zweiwellenkneter (ZSK 53 von der Firma Werner & Pfleiderer) mit einem Schneckendurchmesser von 53 mm
- einer Lochdüse zur Ausformung von Schmelzesträngen
- einem Wasserbad zur Abkühlung und dem Verfestigen der Stränge
- einem Granulator.

Bei der Herstellung der Compounds wurde so vorgegangen, dass zu den unten angegebenen Mengen an Makrolon® DP1-1883 eine Mischung aus Makrolon® 1243 MAS 157 und den unten angegebenen weiteren Zuschlagstoffen zudosiert wurde, so dass die in den Beispielen genannten Mischungen (Compounds) resultieren.

### Material für die Basisschicht des Beispiels 1 (Vergleich):

77,5 % Makrolon^{®} DP1-1883
17,5 % Makrolon^{®} 1243 MAS 157
5 % Streuadditiv-Compound

### Material für die Basisschicht des Beispiels 2 (Vergleich):

76,5 % Makrolon^{®} DP1-1883
16,5 % Makrolon^{®} 1243 MAS 157
5 % Streuadditiv-Compound
2 % Pocan^{®} 1300

### Material für die Basisschicht des Beispiels 3 (Vergleich):

75 % Makrolon^{®} DP1-1883
15 % Makrolon^{®} 1243 MAS 157
5 % Streuadditiv-Compound
5 % Reofos^{®} BAPP

### Material für die Basisschicht des Beispiels 4 (erfindungsgemäß):

74 % Makrolon^{®} DP1-1883
14 % Makrolon^{®} 1243 MAS 157
2 % Pocan^{®} 1300
5 % Streuadditiv-Compound
5 % Reofos^{®} BAPP

Diese Zusammensetzungen wurden jeweils als Material für die Basisschicht für die Extrusion der Stegplatten verwendet. Die Gehäusetemperaturen des zur Herstellung der Basismaterialien verwendeten oben genannten Compoundierungs-Extruders betrugen in Zone 1 60 - 80 °C, in der Zone 2 140 - 160 °C und in den folgenden Zonen jeweils zwischen 280 und 305 °C. Der Durchsatz lag bei ca. 75 kg / h. Die Schmelzetemperatur betrug zwischen 340°C und 350°C. Die Dosierung des Reofos^{®} BAPP erfolgte in aufgeschmolzener Form.

### Herstellung der Polycarbonat-Stegfünffachplatten:

Es wurden Polycarbonat-Stegfünffachplatten mit Hilfe folgender Maschinen und Apparate hergestellt:
- einem Einschneckenextruder (Entgasungsextruder, Schneckendurchmesser 70 mm und einer Einschnecke der Länge 33 D, Einschnecke, Fa. Reifenhäuser, Troisdorf /Germany)
   Der Extruder ist mit einer Vakuum-Schmelzeentgasung ausgerüstet.
- einem 2-Schicht Coextrusionsadapter (Festadapter der Fa. Bexsol, Italy)
- einem 3-Zonen-Coextruder (Schneckendurchmesser 30 mm, Einschnecke der Länge 25 D, Fa. Omipa, Italy)
- einer Stegplattendüse der Breite 500 mm, für Stegplattendicken von 8 bis 45 mm der Fa. Bexsol, Italy
- einem zweiteiligen Vakuumkalibrator, Breite 500 mm, Länge 2x950 mm, Fa. Breyer, Singen/Germany
- einer Rollenbahn, Rollenbahnlänge (Abstand Kalibrator / Ablängung) 3,5 m
- einer Abzugseinrichtung
- einer Quertrenneinrichtung (Messer)
- einem Ablagetisch.

Als Deckschicht (einseitig) wurde in allen Beispielen 1 - 4 ein Material verwendet, welches lineares Polycarbonat und einen UV-Absorber auf Triazinbasis enthält. Dieses Material ist unter dem Handelsnamen Makrolon^{®} DP1-1816 MAS 073 von der Firma Bayer MaterialScience AG erhältlich. Die Deckschicht erhält man durch Coextrusion. Die Dicke der Coexschicht beträgt 50 µm.

Die einseitig mit einer Coextrusionsschicht versehenen Stegplatten (Beispiele 1 - 4) wurden wie folgt hergestellt: Das Polycarbonat-Granulat des Basismaterials wurde jeweils dem Fülltrichter des Hauptextruders zugeführt und über die Zylinder/Schnecke aufgeschmolzen und gefördert. Die Temperaturen der einzelnen Gehäuse des Hauptextruders lagen bei 240° bis 260°C, die resultierende Massetemperatur bei 240 - 255 °C. Die Wellendrehzahl lag zwischen 50 und 56 U/min. Als Material für die einseitige Coextrusionsschicht wurde Makrolon^{®} DP1-1816 MAS 073 verwendet, welches dem Fülltrichter des Coextruders zugeführt wurde. Die Gehäusetemperaturen des Coextruders lagen bei 265 °C, die Massetemperatur bei ca. 252 °C. Die Wellendrehzahl betrug 10 U / min.

Beide Materialschmelzen wurden im Coexadapter zusammengeführt und anschließend in einer speziellen Extrusionsdüse geformt, bei der es sich um eine Stegplattendüse zur Herstellung eines Hohlkammerprofils, bestehend aus einem Obergurt, einem Untergurt sowie 3 Mittelgurten handelt. Das Profil weist zudem Stege mit einem X-Profil auf. Die Abzugsgeschwindigkeit betrug 0,7 m/s. Die weiteren Einrichtungen der Anlagen dienten zum Transport, Ablängen und Ablegen der Platten.

Die mit Hilfe dieser Düse extrudierten Platten wiesen eine Dicke von ca. 40 mm und eine Plattenbreite von 510 mm auf und hatten ein Flächengewicht von 4,4 kg / m2. Die Deckschicht (aus der Coextrusion) enthält Makrolon^{®} DP1-1816 MAS 073 in einer Dicke von 50 µm. Im Idealfall sollte die resultierende Stegplatte das Profil wie in Abb. 1 beschrieben aufweisen.

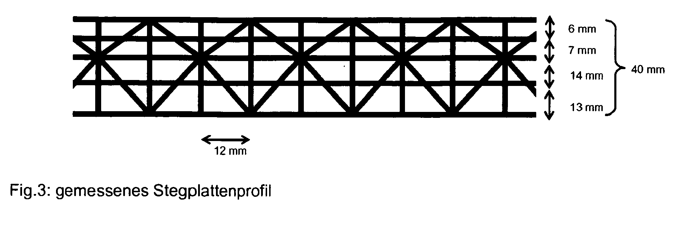

Es handelt sich bei den hergestellten Stegplatten um Fünffach-Stegplatten mit Abweichungen von der Idealgeometrie, die allerdings für das Flammschutzverhalten unerheblich sind. Vor allem die Plattendicke sowie das Flächengewicht sind entscheidende Parameter für das Flammverhalten. Zur Vollständigkeit wurde das resultierende Stegplattenprofil nochmals vermessen. Das Ergebnis ist in Fig. 3 gezeigt. Die Coextrusionsschicht ist in der Abbildung nicht aufgeführt, sie befindet sich auf dem Obergurt in einer Dicke von 50 µm.

### Flammschutzprüfungen:

Die Brandschachtprüfung nach DIN 4102 sieht folgende Bedingungen vor: 4 Proben der Abmessungen 19 cm x 100 cm x Originaldicke werden senkrecht und zueinander rechtwinklig angeordnet.

Nach 10-minütiger Beflammung mit einem Ringbrenner wird der Brenner abgeschaltet. Der Brandschachttest gilt als bestanden, wenn - der Mittelwert der unzerstörten Restlängen mindestens 150 mm beträgt und keine Probe vollständig verbrennt (Restlänge 0 mm), - die mittlere Rauchgastemperatur 200°C nicht überschreitet.

Vor der Prüfung werden die Formteile in Normklima gelagert, bis sie gewichtskonstant sind. Die Granulate von Polycarbonat und Polyester werden gemischt und können sowohl direkt auf einem Extruder zu Platten verarbeitet werden als auch nach vorgeschalteter Homogenisierung auf einem Extruder und anschließender Granulierung.

Alle Brandprüfungen wurden im zertifizierten Brandhaus der Currenta GmbH & Co. OHG, Leverkusen gemäß DIN 4102 durchgeführt.

Als Flammschutzprüfung wurde der oben beschriebene Brandschachttest an den Platten der Beispiele 1 - 4 durchgeführt. Die Ergebnisse sind in der unten gezeigten Tabelle aufgeführt.

Als weiterer Flammschutztest wurde ein Tropftest nach NF P 92-505 durchgeführt. Dieser Test ist Bestandteil des Prüfungsprogramms nach französischen Baustoffvorschrift. Dieses Prüfprogramm unterteilt sich in den Kabinentest, die Elektrobrennerprüfung und den Tropftest. Je nach Material sind unterschiedliche Tests relevant. Hinsichtlich der Performance des thermoplastischen Materials ist hier vor allem der Tropftest von Wichtigkeit. Dabei wird die Probe in 30 mm Abstand zum Heizstrahler horizontal auf einem Rost angeordnet. Während der Prüfdauer von 10 Minuten wird das Entzündungs- und Abtropfverhalten beobachtet. Zündet die Probe während der ersten 5 Versuchsminuten, wird der Strahler bis zum Verlöschen der Flammen weggeschwenkt. Für die folgenden 5 Minuten wird die thermische Belastung, unabhängig von einer Entzündung, nicht unterbrochen. "Brennendes Abtropfen" liegt vor, wenn bei mindestens einem von 4 Versuchen die 300 mm unterhalb der Probe liegende Zellstoffwatte entzündet wird. Brennendes Abtropfen führt zu zur Einstufung "nicht bestanden".

**Tabelle 1**

| | **Brandschacht** | | | **Tropf test** |
|---|---|---|---|---|
| **Stegplatte aus Beispiel** | **DIN 4102-B1** | **Max. Durchschnittsrauchgastemperatur [°C]** | **Max. Absorptions Integral [%*min]** | **NF P 92-505** |
| **1** | Nicht bestanden | > 300 | - | Nicht bestanden |
| **2** | Nicht bestanden | > 300 | - | Nicht bestanden |
| **3** | bestanden | 120,7 | 82,3 | Nicht bestanden |
| **4** | bestanden | 118,6 | 56,2 | bestanden |

Man erkennt deutlich, dass die Platte aus der erfindungsgemäßen Zusammensetzung (Beispiel 4) die relevanten Flammschutzprüfungen besteht, wohingegen die Vergleichsplatten aus Zusammensetzungen mit anderen Rezepturen nach Stand der Technik die entsprechenden Flammschutzprüfungen nicht bestehen.

## Patentansprüche

1. Zusammensetzung enthaltend aromatisches Polycarbonat und
a) 0,10 Gew.-% - 4,00 Gew.-% eines Acrylat-basierten Streuadditivs,
b) 0,50 Gew.-% - 5,00 Gew.-% eines aromatisch-aliphatischen Polyesters und
c) 0,50 Gew.-% - 8,00 Gew.-% eines Phosphor-basierten Flammschutzmittels.

2. Zusammensetzung gemäß Anspruch 1, **dadurch gekennzeichnet, dass** der aromatische-aliphatische Polyester ein Polybutylenterephthalat ist.

3. Zusammensetzung gemäß Anspruch 1, **dadurch gekennzeichnet, dass** der aromatische-aliphatische Polyester ein Polyester ist, dessen Säurekomponente zu mindestens 85 Mol-% aus Terephthalsäure und dessen Diolkomponente zu mindestens 80 Mol-% aus einem oder mehreren Diolen ausgewählt aus der Gruppe enthaltend Butandiol-1,4, Ethandiol-1,2 und Cyclohexandimethanol-1,4 bestehen.

4. Zusammensetzung gemäß einem der vorangehenden Ansprüche, **dadurch gekennzeichnet, dass** das Phosphor-basierte Flammschutzmittel ausgewählt ist aus der Gruppe enthaltend eine oder mehrere Verbindungen der allgemeinen Formel (4) 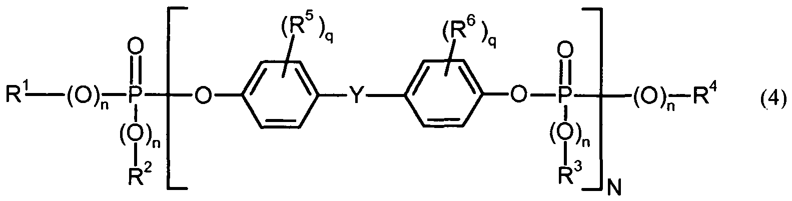 worin
R¹, R², R³ und R⁴, unabhängig voneinander gegebenenfalls durch Halogen substituiertes C₁-C₈-Alkyl, jeweils gegebenenfalls durch Halogen und bzw. oder Alkyl substituiertes C₅-C₆-Cycloalkyl, C₆-C₁₀-Aryl oder C₇-C₁₂-Aralkyl,
n unabhängig voneinander 0 oder 1,
q unabhängig voneinander 0, 1, 2, 3 oder 4,
bedeuten und
N 0, 60 bis 4,00, vorzugsweise 0,90 bis 2,50, insbesondere 1,00 bis 1,15 ist,
R⁵ und R⁶ unabhängig voneinander C₁-C₄-Alkyl, vorzugsweise Methyl oder Halogen, vorzugsweise Chlor und/oder Brom bedeuten, und
Y C₁-C₇-Alkyliden, C₁-C₇-Alkylen, C₅-C₁₂-Cycloalkylen, C₅-C₁₂-Cycloalkyliden,-O-, -S-, -SO-, -SO₂-, -CO- oder einen Rest der Formel (5) oder (6) 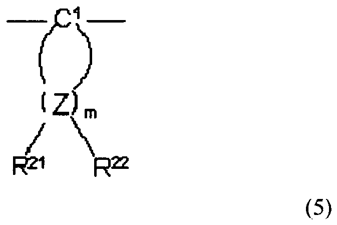 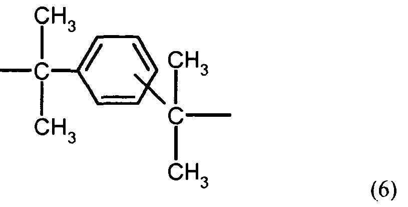 mit
Z = Kohlenstoff und
R²¹ und R²² für jedes Z individuell wählbar, unabhängig voneinander Wasserstoff oder C1-C6-Alkyl, vorzugsweise Wasserstoff, Methyl oder Ethyl,
m eine ganze Zahl von 4 bis 7, bevorzugt 4 oder 5,
mit der Maßgabe, dass an mindestens einem Atom Z R²¹ und R²² gleichzeitig Alkyl sind, bedeutet.

5. Zusammensetzung nach Anspruch 4, wobei das phosphathaltige Flammschutzmittel Bisphenol-A-diphosphat enthält.

6. Zusammensetzung gemäß einem der vorangehenden Ansprüche, **dadurch gekennzeichnet, dass** das Streuadditiv ausgewählt ist aus der Gruppe der Acrylat-Streuadditive, enthaltend Kern-Schale-Polymer auf Basis Polymethylacrylat und Polybutylacrylat, teilvernetzte spherische Acrylatpartikel, vollvernetzte spherische Acrylatpartikel, teilvernetzte nicht-spherische Acrylatpartikel und vollvernetzte nicht-spherische Acrylatpartikel ist.

7. Platte, enthaltend die Zusammensetzung nach einem der Ansprüche 1 - 6.

8. Platte nach Anspruch 7, wobei die Platte eine Massiv- oder Stegplatte ist.

9. Platte nach Anspruch 7 oder 8, **dadurch gekennzeichnet, dass** es sich um eine mehrschichtige Platte handelt und die Zusammensetzung in der Basisschicht enthaltend ist.

10. Platte nach Anspruch 8 oder 9, **dadurch gekennzeichnet, dass** die Basisschicht eine Mischung aus verzweigtem und linearem aromatischem Polycarbonat enthält.

11. Platte nach Anspruch 9 oder 10, zusätzlich enthaltend eine einseitig coextrudierte Deckschicht oder beidseitig coextrudierte Deckschichten enthaltend UV-Absorber.

12. Platte gemäß Anspruch 11, wobei der UV-Absorber in der Deckschicht bzw. den Deckschichten ausgewählt ist aus einem oder mehreren Verbindungen der Gruppe enthaltend Triazine, Benztriazole, Cyanacrylate und Bismalonate und die Basisschicht keinen UV-Absorber oder einen oder mehrere UV-Absorber ausgewählt aus der Gruppe enthaltend Benztriazole, Cyanacrylate und Bismalonate enthält.

13. Platte nach einem oder mehreren der voranstehenden Ansprüche, **dadurch gekennzeichnet, dass** diese sowohl den Brandschachttest gemäß DIN 4102 B1 als auch den Tropftest gemäß NF P 92-505 besteht.

14. Herstellung einer Platte nach Anspruch 11 durch Coextrusion.

15. Verwendung von Zusammensetzungen gemäß einem oder mehreren der Ansprüche 1 bis 6 zur Vermeidung eines brennenden Abtropfens sowie zur Reduzierung der maximalen Rauchgastemperatur im Brandfall im Vergleich zu nicht erfindungsgemäß ausgerüsteten Zusammensetzungen bei extrudierten Platten.

## Claims

1. A composition containing aromatic polycarbonate and
a) 0.10 wt.% - 4.00 wt.% of an acrylate-based scattering additive,
b) 0.50 wt.% - 5.00 wt.% of an aromatic-aliphatic polyester and
c) 0.50 wt.% - 8.00 wt.% of a phosphorus-based flame retardant.

2. The composition according to claim 1, **characterised in that** the aromatic-aliphatic polyester is a polybutylene terephthalate.

3. The composition according to claim 1, **characterised in that** the aromatic-aliphatic polyester is a polyester, of which the acid component consists of at least 85 mole % terephthalic acid and the diol component consists of at least 80 mole % of one or more diols selected from the group containing 1,4-butanediol, 1,2-ethanediol and 1,4-cyclohexanedimethanol.

4. The composition according to one of the preceding claims, **characterised in that** the phosphorus-based flame retardant is selected from the group containing one or more compounds of the general formula (4) 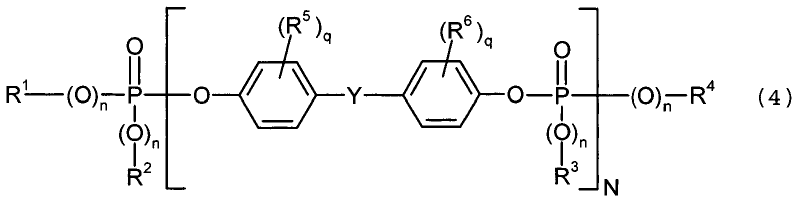 wherein
R¹, R², R³ and R⁴, independently of one another, signify optionally halogen-substituted C₁-C₈ alkyl or, each optionally halogen- and/or alkylsubstituted, C₅-C₆ cycloalkyl, C₆-C₁₀ aryl or C₇-C₁₂ aralkyl,
n independently of one another signifies 0 or 1,
q independently of one another signifies 0, 1, 2, 3 or 4,
and
N is 0.60 to 4.00, preferably 0.90 to 2.50, in particular 1.00 to 1.15,
R⁵ and R⁶, independently of one another, signify C₁-C₄ alkyl, preferably methyl or halogen, preferably chlorine and/or bromine, and
Y signifies C₁-C₇ alkylidene, C₁-C₇ alkylene, C₅-C₁₂ cycloalkylene, C₅-C₁₂ cycloalkylidene, -O-, -S-, -SO-, -SO₂-, -CO- or a residue of formula (5) or (6) 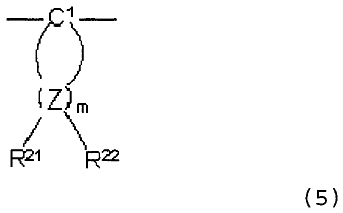 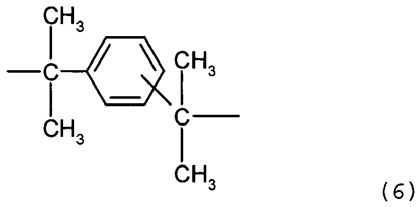 with
Z = carbon and
R²¹ and R²² can be selected for each Z individually and, independently of one another, signify hydrogen or C1-C6 alkyl, preferably hydrogen, methyl or ethyl,
m is an integer from 4 to 7, preferably 4 or 5, with the proviso that, on at least one Z atom, R²¹ and R²² are simultaneously alkyl.

5. The composition according to claim 4, wherein the phosphate-containing flame retardant contains bisphenol A diphosphate.

6. The composition according to one of the preceding claims, **characterised in that** the scattering additive is selected from the group of the acrylate scattering additives, containing core-shell polymers based on polymethyl acrylate and polybutyl acrylate, partially crosslinked spherical acrylate particles, fully crosslinked spherical acrylate particles, partially crosslinked non-spherical acrylate particles and fully crosslinked non-spherical acrylate particles.

7. A sheet containing the composition according to one of claims 1 - 6.

8. The sheet according to claim 7, wherein the sheet is a solid or multi-wall sheet.

9. The sheet according to claim 7 or 8, **characterised in that** it is a multi-layer sheet and the composition is present in the base layer.

10. The sheet according to claim 8 or 9, **characterised in that** the base layer contains a mixture of branched and linear aromatic polycarbonate.

11. The sheet according to claim 9 or 10, additionally containing a coextruded covering layer on one side or coextruded covering layers on both sides containing UV absorbers.

12. The sheet according to claim 11, wherein the UV absorber in the covering layer or covering layers is selected from one or more compounds from the group containing triazines, benzotriazoles, cyanoacrylates and bismalonates and the base layer contains no UV absorber or one or more UV absorbers selected from the group containing benzotriazoles, cyanoacrylates and bismalonates.

13. The sheet according to one or more of the preceding claims, **characterised in that** this passes both the fire shaft test according to DIN 4102 B1 and the dripping test according to NF P 92-505.

14. Production of a sheet according to claim 11 by coextrusion.

15. Use of compositions according to one or more of claims 1 to 6 to avoid burning drips and to reduce the maximum flue gas temperature in the event of fire compared with compositions that are not treated according to the invention in extruded sheets.

## Revendications

1. Composition contenant un polycarbonate aromatique et
a) 0,10 % en poids - 4,00 % en poids d'un additif dispersant à base d'acrylate,
b) 0,50 % en poids - 5,00 % en poids d'un polyester aromatique-aliphatique et
c) 0,50 % en poids - 8,00 % en poids d'un agent ignifuge à base de phosphore.

2. Composition selon la revendication 1, **caractérisée en ce que** le polyester aromatique-aliphatique est un poly(butylène-téréphtalate).

3. Composition selon la revendication 1, **caractérisée en ce que** le polyester aromatique-aliphatique est un polyester dont le composant acide est constitué à raison d'au moins 85 % en moles d'acide téréphtalique et dont le composant diol est constitué à raison d'au moins 80 % en moles d'un ou de plusieurs diols choisis dans le groupe contenant le butanediol-1,4, l'éthanediol-1,2 et le cyclohexanediméthanol-1,4.

4. Composition selon l'une quelconque des revendications précédentes, **caractérisée en ce que** l'agent ignifuge à base de phosphore est choisi dans le groupe contenant un ou plusieurs composés de formule générale (4) 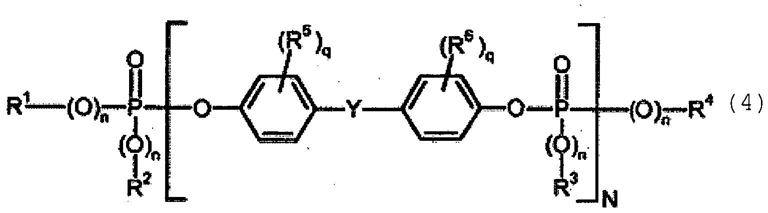 dans laquelle
R¹, R², R³ et R⁴ représentent indépendamment les uns des autres un groupe alkyle en C₁-C₈ éventuellement substitué par halogéno, un groupe cycloalkyle en C₅-C₆, aryle en C₆-C₁₀ ou aralkyle en C₇-C₁₂ chacun éventuellement substitué par halogéno et/ou alkyle,
n représente chaque fois indépendamment 0 ou 1,
q représente chaque fois indépendamment 0, 1, 2, 3 ou 4 et
N vaut 0,60 à 4,00, de préférence 0,90 à 2,50, en particulier 1,00 à 1,15,
R⁵ et R⁶ représentent indépendamment l'un de l'autre un groupe alkyle en C₁-C₄, de préférence méthyle, ou un atome d'halogène, de préférence de chlore et/ou de brome, et
Y représente un groupe alkylidène en C₁-C₇, alkylène en C₁-C₇, cycloalkylène en C₅-C₁₂, cycloalkylidène en C₅-C₁₂, -O-, -S-, -SO-, -SO₂-, -CO- ou un radical de formule (5) ou (6) 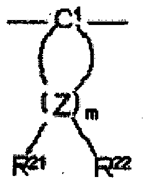 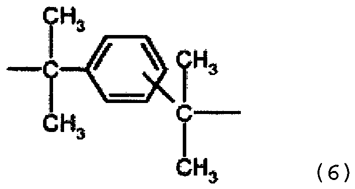 où
Z représente un atome de carbone et
R²¹ et R²², pouvant être choisis individuellement pour chaque Z, représentent indépendamment l'un de l'autre un atome d'hydrogène ou un groupe alkyle en C₁-C₆, de préférence un atome d'hydrogène, le groupe méthyle ou éthyle,
m représente un nombre entier valant de 4 à 7, de préférence 4 ou 5,
étant entendu que sur au moins un atome Z R²¹ et R²² sont simultanément des groupes alkyle.

5. Composition selon la revendication 4, dans laquelle l'agent ignifuge phosphoré contient du diphosphate de bisphénol A.

6. Composition selon l'une quelconque des revendications précédentes, **caractérisée en ce que** l'additif dispersant est choisi dans le groupe des additifs dispersants acrylate, contenant un polymère à noyau-enveloppe à base de poly(acrylate de méthyle) et poly(acrylate de butyle), des particules d'acrylate sphériques partiellement réticulées, des particules d'acrylate sphériques totalement réticulées, des particules d'acrylate non sphériques partiellement réticulées et des particules d'acrylate non sphériques totalement réticulées.

7. Plaque, contenant la composition selon l'une quelconque des revendications 1 - 6.

8. Plaque selon la revendication 7, la plaque étant une plaque pleine ou alvéolaire.

9. Plaque selon la revendication 7 ou 8, **caractérisée en ce qu'**il s'agit d'une plaque multicouche et la composition est contenue dans la couche de base.

10. Plaque selon la revendication 8 ou 9, **caractérisée en ce que** la couche de base contient un mélange de polycarbonate aromatique linéaire et de polycarbonate aromatique ramifié.

11. Plaque selon la revendication 9 ou 10, en outre contenant une couche de recouvrement coextrudée sur une face ou des couches de recouvrement coextrudées sur les deux faces, contenant un absorbeur UV.

12. Plaque selon la revendication 11, dans laquelle l'absorbeur UV dans la couche de recouvrement ou les couches de recouvrement est choisi parmi un ou plusieurs composés du groupe contenant des triazines, benzotriazoles, cyanoacrylates et bismalonates et la couche de base ne contient pas d'absorbeur UV ou contient un ou plusieurs absorbeurs UV choisis dans le groupe contenant des benzotriazoles, cyanoacrylates et bismalonates.

13. Plaque selon une ou plusieurs des revendications précédentes, **caractérisée en ce qu'**elle passe aussi bien le test de réaction au feu selon DIN 4102 B1 que l'essai de goutte selon NF P 92-505.

14. Fabrication d'une plaque selon la revendication 11 par coextrusion.

15. Utilisation de compositions selon une ou plusieurs des revendications 1 à 6 pour éviter une formation de gouttes enflammées ainsi que pour abaisser la température maximale des gaz de combustion dans le cas d'incendie, par comparaison avec des compositions non traitées selon l'invention dans des plaques extrudées.
